# EUROPÄISCHE PATENTSCHRIFT

(11) **EP 2 169 283 B1**
(45) Veröffentlichungstag und Bekanntmachung des Hinweises auf die Patenterteilung: **16.11.2011**
(21) Anmeldenummer: 08016967.5
(22) Anmeldetag: 26.09.2008
(51) Int. Cl.: F16J 15/06, F16L 23/18, F16L 23/22

(54) **Flachdichtung zum Abdichten von Flanschen Im Krafthauptschluss**
Flat gasket for sealing flanges in power determination
Joint plat destiné à étanchéifier des brides dans la liaison de force

(43) Veröffentlichungstag der Anmeldung: 31.03.2010
(73) Patentinhaber: Klinger AG, 6300 Zug (CH)
(72) Erfinder: Eisenach, Frank-Peter, 42929 Wermelskirchen (DE)
(74) Vertreter: Sparing Röhl Henseler Patentanwälte European Patent Attorneys

(56) Entgegenhaltungen:
- EP-A- 0 597 819
- DE-A1- 2 851 566
- DE-A1- 19 504 186
- DE-B- 1 023 736
- DE-U1- 29 707 063
- US-A1- 2007 045 968

## Beschreibung

Die Erfindung betrifft eine Flachdichtung zum Abdichten von Flanschen im Krafthauptschluss für den Behälter- und Rohrleitungsbau nach dem Oberbegriff des Anspruchs 1.

Aus US 2007/0045968 A1 ist eine Flachdichtung bekannt, die die Merkmale des Oberbegriffs des Anspruchs 1 zeigt.

Aus DE 195 04 186 A1 ist eine aus einem gummielastischen Material hergestellte Axialdichtung bekannt, die drei einstückig hergestellte Dichtabschnitte besitzt, die als O-Ringe ausgebildet und durch zwei sich in der Längsmittelebene der Axialdichtung befindliche Stege miteinander verbunden sind. Die Stege 14 sind flacher als die O-Ringe und stehen mit ihren parallel zur Ebene des mittleren O-Rings verlaufenden Flachseiten gegenüber den O-Ringen zurück. Jeder Steg dient als Haltesteg für einen Butzen, der einstückig an den Haltesteg angeformt ist und zur einen Seite hin von diesem absteht. Die Butzen sind im Wesentlichen von zylindrischer Form und können in entsprechende Ausnehmungen eines Bauteils eingedrückt werden. Die Lage der Axialdiehtung bezüglich des Bauteils ist genau definiert, so dass auch dann, wenn der Einbauraum eng ist, eine Montage ohne ein Beschädigen oder Verschieben der Axialdichtung möglich ist.

Aus DE 1 023 736 AS ist eine Flachdichtung aus elastischem Werkstoff mit einer flach in der Ringebene liegenden Einlage aus steifem Werkstoff, wie Metall, Kunststoff oder dgl., bekannt. Damit die Flachdichtung bei möglichst geringem Anpressdruck schon einwandfrei abdichtet und bei wieder eintretender Entlastung genügend bleibende Elastizität aufweist, ist die Flachdichtung in radialer Richtung in verschiedenen Dicken ausgeführt. Nachteilig ist jedoch, dass für den Einbau derartiger Flachdichtungen Klebemittel als Hilfsmittel erforderlich sind, insbesondere dann, wenn der Einbau unterflur oder in Grabentiefen zu erfolgen hat, wie dies beispielsweise bei Unterflurhydranten der Fall ist. Solche Klebemittel sind unsichere Hilfsmiftel, die zudem schädlichen Einfluss auf den Kontakt mit Flüssigkeiten, wie Trinkwasser, haben.

Aufgabe der Erfindung ist es daher, eine Flachdichtung zu schaffen, die einfach und sicher zentriert montierbar ist.

Diese Aufgabe wird durch die Merkmale des Anspruchs 1 gelöst.

Hierdurch wird eine Flachdichtung geschaffen, die Montagehilfen in Form von abreißbaren Stopfen aufweist. Mittels dieser Stopfen kann die Flachdichtung filiert und zentriert werden. Die Schraublochöffnungen des Flansches können als Vertiefung zur Führung oder Befestigung der Stopfen genutzt und damit die Flachdichtung einfach, schnell und zentriert montiert werden. Doppelseitiges Klebeband oder Klebemittel werden nicht mehr benötigt.

Durch ein Hereindrücken einer Schraube in das Schraubloch des Flansches kann die Dünnstelle des Filmgelenks abgerissen und der Stopfen durch das Schraubloch herausgedrückt werden. Die Flachdichtung kann somit immer zentrisch auf der Dichtfläche des Flansches gehalten werden. Die Flachdichtung kann durch vorzugsweise zwei Stopfen, die in die Schraublöcheröffnungen der Flansche eingreifen, an einer Seite des Flansches befestigt und gegen Herausfallen geschützt werden. Vorzugsweise sind die Stopfen derart an den Dichtungsring angelenkt, dass der Stopfen beim Auflegen der Flachdichtung auf eine Flanschplatte nur geringfügig in eine Schraublochöffnung hineinragt, also quasi durch Einlegen bzw. Eindrücken des Stopfens eine Verbindung zu einer ersten Flanschplatte geschaffen wird. Ein demgegenüber vorzugsweise längerer Abschnitt des Stopfens dient als Justierhilfe für das Aufsetzen der zweiten Flanschplatte.

Die Flachdichtung kann in allen Abmessungen und wählbaren elastomeren Werkstoffen hergestellt werden. Bevorzugt bestehen die Stopfen aus einem härteren Elastomer, wodurch das Ausstoßen des abgerissenen Stopfens durch ein Schraubloch verbessert wird.

Weitere Ausgestaltungen der Erfindung sind der nachfolgenden Beschreibung und den Unteransprüchen zu entnehmen.
Fig. 1 zeigt schematisch eine Draufsicht des Teilstücks einer Flachdichtung,
Fig. 2 zeigt schematisch einen Querschnitt der Flachdichtung gemäß Fig. 1,
Fig. 3 zeigt schematisch einen Querschnitt eines Teilstücks der Flachdichtung, und zwar montiert zwischen zwei Flanschplatten.

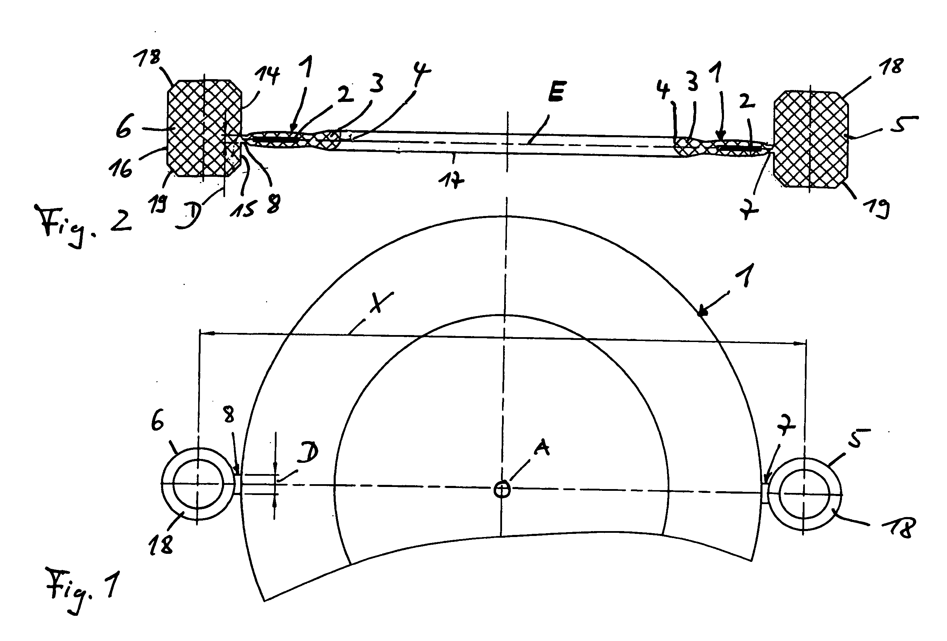

Die in den Fig. 1 bis Fig. 3 dargestellte Flachdichtung betrifft eine Flachdichtung zum Abdichten von Flanschen im Krafthauptschluss für den Behälter- und Rohr leitungsbau. Bei Dichtungen im Krafthauptschluss wird die gesamte Schraubkraft von der Dichtung aufgenommen und die Dichtung muss neben der Abdichtfunktion auch noch zusätzlich die Übertragung von Kräften übernehmen, weshalb eine korrekt sitzende Dichtverbindung erforderlich ist. Bei den zu verbindenden Bauteilen handelt es sich in der Regel um Behälter- oder Rohrleitungsflansche.

Gemäß Fig. 1 und Fig. 2 umfasst die Flachdichtung einen Dichtungsring 1 aus elastischem Werkstoff mit einer in der Ringebene liegenden Einlage 2 aus steifem Werkstoff. Die elastische Schicht 3 des Dichtungsringes 1 weist in radialer Richtung verschiedene Dicken auf. Der Dichtungsring 1 ist vorzugsweise linsenförmig gestaltet mit angeformter Speerspitze 4 an der Innenseite des Dichtungsringes 1.

Am äußeren Umfang des Dichtungsringes 1 sind mindestens zwei spiegelsymmetrisch zueinander angeordnete Stopfen 5, 6 vorgesehen, die über jeweils ein Filmgelenk 7, 8 mit dem Dichtungsring 1 verbunden sind, Vorzugsweise sind am äußeren Umfang zwei im Abstand von 180° angeordnete Stopfen 5, 6 vorgesehen.

Der Dünnstellenbereich D des Filmgelenkes 7, 8 bildet eine Abreißverbindung für den jeweiligen Stopfen 5, 6 von dem Dichtungsring 1.

Die Stopfen 5, 6 sind vorzugsweise wie folgt gestaltet und ausgelegt.

Die Stopfen 5, 6 sind vorzugsweise parallel zu einer Rohrachse A des Dichtungsringes 1 ausgerichtet angeordnet.

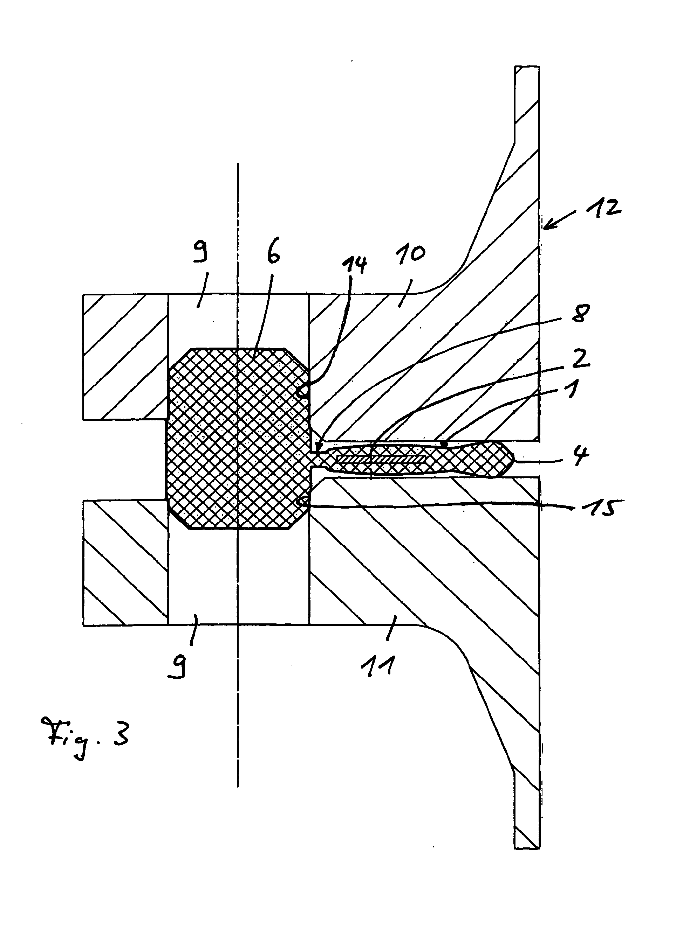

Die Länge des Dünnstellenbereiches D des Filmgelenks 7, 8 ist bestimmt zur Positionierung des Stopfens 5, 6 in einem Schraubloch 9 des abzudichtenden Flansches 12 mit seinen beiden Flanschplatten 10, 11 (vgl. Fig. 3). Die Stopfen 5, 6 besitzen dazu einen Abstand X voneinander (vgl. Fig. 1), der vorgegeben ist durch den Abstand gegenüberliegender Schraublöcher 9 eines Flansches 12.

Die Stopfen 5, 6 sind vorzugsweise rund ausgebildet und weisen einen Durchmesser auf, der an einen Durchmesser einer Schraublochöffnung des Schraublochs 9 eines abzudichtenden Flansches 12 anpassbar ist, um vorzugsweise eine mechanische Fügestelle zu erreichen.

Die Stopfen 5, 6 sind beidseitig der Dichtungsebene E (vgl. Fig. 2) des Dichtungsringes 1 mit vorzugsweise unterschiedlichen Längenabschnitten 14, 15 einer Gesamtlänge 16 angebunden an den Dichtungsring 1. Einer der beiden Längenabschnitte 14, 15 beträgt vorzugsweise weniger als 30% der Gesamtlänge 16 eines Stopfens 5, 6. Der kürzere Längenabschnitt 15 steht vorzugsweise gegenüber einer Unterseite 17 des Dichtungsringes 1 vor. Vorzugsweise ragt der Stopfen 5, 6 mit diesem kürzeren Längenabschnitt 15 ca. 1 bis 5 mm in das Schraubloch 9 beim Aufsetzen auf die Flanschplatte 11 bei einer Dichtungsmontage (vgl. Fig. 3).

Die Stopfen 5, 6 weisen ferner vorzugsweise kopf- und/oder bodenseitig eine Ringfase 18, 19 auf. Als elastischer Werkstoff ist ein elastomerer Werkstoff, insbesondere Ethylen-Propylen-Elastomer (EPDM), vorgesehen. Die Stopfen 5, 6 bestehen dabei aus einem härteren Kunstkautschuk als die elastische Schicht 3 des Dichtungsringes 1.

Wie vorstehend ausgeführt, ist die Höhe, d. h. die Gesamtlänge 16, des Stopfens 5. 6 so gestaltet, dass zunächst ein Unterteil oder Oberteil des Stopfens 5, 6 in das Schraubloch 9 der oberen oder unteren Flanschplatte 10, 11 des Flansches 12 eingedrückt wird und danach die jeweils andere Flanschplatte 10, 11 aufgesetzt wird. Der sich dann ergebende Dichtungsverbund ist in Fig. 3 dargestellt. Durch Hereindrücken der Schrauben in die Schraubenlöcher 9 des Flansches 12 werden die Filmgelenke 7, 8, d.h. die vorzugsweise anvulkanisierten Abreißverbindungen, abgerissen und die Stopfen 5, 6 durch das jeweilige Schraubloch 9 herausgedrückt. Die insoweit verlorenen Montagehilfen können die Dichtfunktion der Flachdichtung weder behindem noch beeinflussen.

Die Flachdichtung bleibt durch die Montagehilfe der Stopfen 5, 6 immer zentrisch auf der Dichtleiste des Flansches 12. Die Flachdichtung ist durch die Stopfen 5, 6, die in die Schraublöcher 9 der Flansche 12 eingreifen, an einer der Flanschplatten 10, 11 festgesteckt und gegen Herausfallen geschützt. Die Flachdichtung kann entsprechend allen Abmessungen der abzudichtenden Flansche hergestellt werden.

## Patentansprüche

1. Flachdichtung zum Abdichten von Flanschen im Krafthauptschluss für den Behälter- und Rohrleitungsbau, umfassend einen Dichtungsring (1) aus elastischem Werkstoff mit einer in der Ringebene liegenden Einlage (2) aus steifem Werkstoff, wobei die elastische Schicht (3) in radialer Richtung verschiedene Dicken aufweist, am äußeren Umfang des Dichtungsringes (1) mindestens zwei spiegelsymmetrisch zueinander angeordnete Stopfen (5, 6) vorgesehen sind, die über jeweils ein Filmgelenk (7, 8) mit dem Dichtungsring (1) verbunden sind, und der Dünnstellenbereich (D) des Filmgelenkes (7, 8) eine Abreißverbindung für den jeweiligen Stopfen (5, 6) bildet, **dadurch gekennzeichnet, dass** die Stopfen (5, 6) aus einem härteren Kunstkautschuk bestehen als die elastische Schicht (3) des Dichtungsringes (1).

2. Flachdichtung nach Anspruch 1, **dadurch gekennzeichnet, dass** die Stopfen (5, 6) parallel zu einer Rohrachse (A) des Dichtungsringes (1) angeordnet sind.

3. Flachdichtung nach Anspruch 1 oder 2, **dadurch gekennzeichnet, dass** die Länge des Dünnstellenbereiches (D) des Filmgelenks (7, 8) bestimmt ist zur Positionierung des Stopfens (5, 6) in einem Schraubloch (9) des abzudichtenden Flansches (12).

4. Flachdichtung nach einem der Ansprüche 1 bis 3, **dadurch gekennzeichnet, dass** die Stopfen (5, 6) rund ausgebildet sind mit einem Durchmesser, der an einen Durchmesser einer Schraublöcheröffnung der Schraublöcher (9) eines abzudichtenden Flansches (12) anpassbar Ist.

5. Flachdichtung nach einem der Ansprüche 1 bis 4, **dadurch gekennzeichnet, dass** am äußeren Umfang zwei im Abstand von 180° angeordnete Stopfen (5, 6) vorgesehen sind.

6. Flachdichtung nach einem der Ansprüche 1 bis 5, **dadurch gekennzeichnet, dass** die Stopfen (5, 6) sich beidseitig der Dichtungsebene (E) mit unterschiedlichen Längenabschnitten (14, 15) einer Gesamtlänge (16) erstreckend angebunden sind.

7. Flachdichtung nach Anspruch 6, **dadurch gekennzeichnet, dass** einer der beiden Längenabschnitte (14, 15) weniger als 30% der Gesamtlänge (16) beträgt.

8. Flachdichtung nach Anspruch 6 oder 7, **dadurch gekennzeichnet, dass** der kürzere Längenabschnltt (15) gegenüber einer Unterseite (17) des Dichtungsringes (1) vorsteht.

9. Flachdichtung nach einem der Ansprüche 1 bis 8, **dadurch gekennzeichnet, dass** die Stopfen (5, 6) kopf- und/oder bodenseitig eine Ringfase (18, 19) aufweisen.

10. Flachdichtung nach einem der Ansprüche 1 bis 9, **dadurch gekennzeichnet, dass** als elastischer Werkstoff Ethylen-Propylen-Elastomer (EPDM) vorgesehen ist.

11. Flachdichtung nach einem der Ansprüche 1 bis 10, **dadurch gekennzeichnet, dass** der Dichtungsring (1) linsenförmig gestaltet ist mit angeformter Speerspitze (4) an der Innenseite.

## Claims

1. Flat gasket for sealing flanges in the main force flow for tank and pipeline construction, comprising a sealing ring (1) of elastic material with an insert (2) of rigid material lying in the plane of the ring, the elastic layer (3) having different thicknesses in the radial direction, at least two pegs (5, 6) arranged mirror-symmetrically in relation to one another and connected to the sealing ring (1) in each case by means of a film hinge (7, 8) being provided on the outer circumference of the sealing ring (1), and the region of the thin point (D) of the film hinge (7, 8) forming a tear-away connection for the respective peg (5, 6), **characterized in that** the pegs (5, 6) consist of a harder synthetic rubber than the elastic layer (3) of the sealing ring (1).

2. Flat gasket according to Claim 1, **characterized in that** the pegs (5, 6) are arranged parallel to a pipe axis (A) of the sealing ring (1).

3. Flat gasket according to Claim 1 or 2, **characterized in that** the length of the region of the thin point (D) of the film hinge (7, 8) is determined for positioning the peg (5, 6) in a screw hole (9) of the flange (12) to be sealed.

4. Flat gasket according to one of Claims 1 to 3, **characterized in that** the pegs (5, 6) are of a round form and have a diameter which can be adapted to a diameter of a screw-hole opening of the screw holes (9) of a flange (12) to be sealed.

5. Flat gasket according to one of Claims 1 to 4, **characterized in that** two pegs (5, 6) arranged at a distance of 180° are provided on the outer circumference.

6. Flat gasket according to one of Claims 1 to 5, **characterized in that** the pegs (5, 6) are joined on both sides of the sealing plane (E) with different length portions (14, 15) of an overall length (16).

7. Flat gasket according to Claim 6, **characterized in that** one of the two length portions (14, 15) is less than 30% of the overall length (16).

8. Flat gasket according to Claim 6 or 7, **characterized in that** the shorter length portion (15) protrudes with respect to an underside (17) of the sealing ring (1).

9. Flat gasket according to one of Claims 1 to 8, **characterized in that** the pegs (5, 6) have an annular bevel (18, 19) on the top and/or on the bottom.

10. Flat gasket according to one of Claims 1 to 9, **characterized in that** ethylene-propylene elastomer (EPDM) is provided as the elastic material.

11. Flat gasket according to one of Claims 1 to 10, **characterized in that** the sealing ring (1) is of a lenticular form with a moulded-on spike (4) on the inner side.

## Revendications

1. Joint d'étanchéité plat destiné à étanchéifier des brides dans la liaison de force pour la construction de récipient et de tube, comprenant une bague (1) d'étanchéité en matériau élastique avec un insert (2) en matériau rigide placé dans le plan annulaire, la couche (3) élastique comportant différentes épaisseurs dans la direction radiale, sur la périphérie extérieure de la bague (1) d'étanchéité sont prévus au moins deux bouchons (5, 6) agencés en symétrie miroir l'un par rapport à l'autre, lesdits bouchons sont reliés chacun par une articulation (7, 8) mince à la bague (1) d'étanchéité, et la zone mince (D) de l'articulation (7, 8) forme une liaison déchirable pour le bouchon (5, 6) respectif, **caractérisé en ce que** les bouchons (5, 6) sont faits d'un caoutchouc synthétique plus rigide que la couche (3) élastique de la bague (1) d'étanchéité.

2. Joint d'étanchéité plat selon la revendication 1, **caractérisé en ce que** les bouchons (5, 6) sont disposés parallèlement à un axe (A) du tube de la bague (1) d'étanchéité.

3. Joint d'étanchéité plat selon la revendication 1 ou la revendication 2, **caractérisé en ce que** la longueur de la zone mince (D) de l'articulation (7, 8) est destinée à positionner les bouchons (5, 6) dans un trou (9) fileté de la bride (12) à étanchéifier.

4. Joint d'étanchéité plat selon l'une des revendications 1 à 3, **caractérisé en ce que** les bouchons (5, 6) sont formés de façon circulaire avec un diamètre pouvant être adapté à un diamètre d'une ouverture d'un trou fileté des trous (9) filetés d'une bride (12) à étanchéifier.

5. Joint d'étanchéité plat selon l'une des revendications 1 à 4, **caractérisé en ce qu'**au niveau de la périphérie extérieure sont prévues deux bouchons (5, 6) disposés à une distance de 180°.

6. Joint d'étanchéité plat selon l'une des revendications 1 à 5, **caractérisé en ce que** les bouchons (5, 6) sont reliés de façon à s'étendre des deux côtés du plan d'étanchéité (E) avec des longueurs (14, 15) différentes d'une longueur (16) totale.

7. Joint d'étanchéité plat selon la revendication 6, **caractérisé en ce que** l'un des deux longueurs (14, 15) longitudinaux occupe moins de 30% de la longueur (16) totale.

8. Joint d'étanchéité plat selon la revendication 6 ou la revendication 7, **caractérisé en ce que** la longueur (15) la plus courte est placée en avant par rapport à un côté (17) inférieur de la bague (1) d'étanchéité.

9. Joint d'étanchéité plat selon l'une des revendications 1 à 8, **caractérisé en ce que** les bouchons (5, 6) comportent côté tête et/ou côté fond un chanfrein (18, 19) de bague.

10. Joint d'étanchéité plat selon l'une des revendications 1 à 9, **caractérisé en ce que** de l'élastomère éthylène-propylène (EPDM) est prévue comme matériau élastique.

11. Joint d'étanchéité plat selon l'une des revendications 1 à 10, **caractérisé en ce que** la bague (1) d'étanchéité est formée de façon lenticulaire avec une forme en fer de lance (4) sur le côté intérieur.
